# EUROPÄISCHE PATENTANMELDUNG

(11) **EP 0 922 595 A2**
(43) Veröffentlichungstag der Anmeldung: **16.06.1999**
(21) Anmeldenummer: 98117663.9
(22) Anmeldetag: 17.09.1998
(51) Int. Cl.: B60J 3/02

(54) **Sonnenblendenachse**

(30) Priorität: 09.12.1997 DE 19754533
(71) Anmelder: Johnson Controls Interiors GmbH, 42285 Wuppertal (DE)
(72) Erfinder: Viertel, Lothar, 66802 Altforweiler (DE); Welter, Patrick, 57730 La Chambre (FR)

(57) **Zusammenfassung**

Beschrieben wird eine Sonnenblendenachse (1) für Fahrzeugsonnenblenden, die zumindest überwiegend aus Kunststoff besteht und einen kurzen Achsschenkel (2) sowie einen langen Achsschenkel (3) aufweist, wobei der kurze Achsschenkel (2) in ein an der Fahrzeugkarosserie befestigbares Lagerböckchen eingreift und der lange Achsschenkel (3) in ein im Sonnenblendenkörper eingelagertes Lagergehäuse (13) eingreift, das eine den langen Achsschenkel (3) über einen axialen Teilbereich klemmende Rastfeder (14) trägt mit der Besonderheit, daß der lange Achsschenkel (3) über einen axialen, mit der Rastfeder (14) in Berührung stehenden Teilbereich ein Kunststoffmaterial mit selbstschmierenden Eigenschaften aufweist.

## Beschreibung

Die Erfindung bezieht sich auf eine Sonnenblendenachse der im Oberbegriff des Anspruchs 1 angegebenen Art.

Seit Jahren beschäftigt sich die Anmelderin mit dem Thema Sonnenblendenachse/Lager gefettet, wobei das Endziel "kein Fett" bis heute noch nicht erreicht werden konnte. Fetten ist heute deshalb erforderlich, damit der leidige Effekt des Knarrens (Trockenlauf Achse/Feder) nicht auftritt und bei extremer Belastung (Klappungen, Wärme, Kälte) das Klappmoment nicht ansteigt.

Zurückliegend wurden die unterschiedlichsten Versuche in Form von Erprobungen verschiedenster Fettarten, verschiedener Oberflächenbeschaffenheiten der Rastfedern (durch z.B. zinkhaltige Beschichtungsmaterialien) sowie Achsoberflächengüte, durchgeführt. Die Versuchskombinationen haben keine fettfreie Ausführung erbracht, sondern lediglich eine Findung verbesserter Fetttypen in Paarung mit Verbesserung der Federoberflächen und Achsoberflächen.

Zunächst ist zur "Fettung" zu sagen, daß es sich um eine sogenannte "unsaubere" Behandlungsart handelt, die ungern durchgeführt wird. Die Fettung hat darüber hinaus keine zufriedenstellende Prozeßsicherheit, denn trotz Einsatz von pneumatisch bzw. hydraulisch arbeitenden Fettungsanlagen können Luftblasen im Fett auftreten und es kann vorkommen, daß kein Fett das Lager nebst Rastfeder erreicht. Desweiteren ist ein wesentlicher mangelhafter Umstand darin zu sehen, daß Fettrückstände auf dem Sonnenblendenkörper auftreten können, die im Nachfolgeprozeß unsichtbare Fettabdrücke auf der Folie entstehen lassen, die zu späteren sichtbaren Flecken an der Sichtseite des Sonnenblendenkörpers und zu großen Reklamationen geführt haben. Bei elektrifzierten Sonnenblenden (Kabelzuführung durch hohle Achse) werden die Kabel mit Fett verschmiert, dies stört und führt zu gleichem Mangel wie vor beschrieben.

Bei Sonnenblenden mit elektrischen Kontaktzonen an der Achse und am Lager führt eine nicht gezielte, oder eine Überfettung, zu elektrischen Kontaktstörungen, was auch zu erheblichen Reklamationen führte.

Bei z.B. EPP-Blendenkörpern zeigt sich während/nach Klimawechseltests, daß das Fett wandert (durch Körpermaterial) und damit in Berührung mit der Folie kommt. Bei bestimmten Folienarten führt dies zu Fleckenbildungen und Verwerfungen.
- Resüme:: Die vorgenannten Faktoren zeigen deutlich auf, daß das "Fetten" ein gewisses Risiko darstellt, obwohl Abläufe und Kontrollorganismen vorhanden und vorgeschrieben sind.

Um diese Mängel abzustellen, d.h. das Thema "Fetten" aus dem Fertigungsprozeß zu verbannen, ist es Aufgabe der Erfindung eine Lösung aufzuzeigen, die das bisher als zwingend erforderliche Fetten entbehrlich macht. Die Erfindung soll sich darüber hinaus auszeichnen, durch weniger Verschleiß gegen Stahl (Rastfeder), weniger Reibung und Slip-Stick Effekt, geringere Feuchtigkeitsaufnahme, geringere Dichte (Gewicht / Kosteneinsparung), Einsparung einer Zusatzschmierung sowie Ausschaltung der Gefahr von Verschmutzungen durch Schmiermittel.

Wie sich gezeigt hat, ist Trockenreibung die Hauptursache für Verschleiß. Bei Materialpaarungen haften die Oberflächen aneinander, wobei feine Partikel von einer der beiden Oberflächen abgetragen werden. Geschmolzenes Polymer, große Rillen und Furchen sind ein Anzeichen für einen hohen Verschleißgrad und dafür, daß die Grenze Druck/Geschwindigkeit des Materials überschritten wurde.

Bei einer z.B. Metall-Thermoplast Paarung kennzeichnet sich die Reibung durch Haftung und Verformung der Thermoplaste. Diese zweifache Auswirkung hat zum Ergebnis, daß der dynamische Reibkoeffizient höher ist als der statische.

Unterschiedliche Paarungen oder andere Oberflächenbeschaffenheiten des Reibpartners können die Verschleiß-Reibeigenschaften von Thermoplasten sehr beeinflussen. Beeinflussend ist hier auch die Metalloberflächen-Rauhigkeit sowie die des Thermoplastes. Im allgemeinen kann auch gesagt werden, daß das Verschleißverhalten abhängig ist von der Oberflächenhärte.

Die Erfindung setzt auf den Einsatz von Thermoplasten mit Gleitmitteln, die ein viel besseres Verschleiß- und Reibverhalten haben als unmodifizierte Thermoplaste, denn dies macht sie zu einem idealen Werkstoff für die Verwendung, wo es auf Selbstschmierung, Zuverlässigkeit, Geräusch-/Verschleißreduzierung ankommt.

Für die erfindungsgemäße Sonnenblendenachse kommen insbesondere Thermoplaste die mit PTFE (Polyetrafluorethylen) angereichert sind in Frage, denn diese haben einen bedeutend kleineren Verschleißfaktor und den niedrigsten Reibkoeffizenten. Aber auch Thermoplaste mit Silicon sind von Vorteil, denn sie verbessern das Verschleiß- und Reibverhalten in hohem Maße, während als weitere Gleitmittel auch Graphitpulver (ein hochtemperaturbeständiger Feststoff mit niedriger Reibung), oder Molybdändisulfid verwendet werden können, wobei letzteres als ein festes Gleitmittel, z.B. Polyamid beigemischt, den Verschleißfaktor verringert. Zudem überträgt Molybdändisulfid die Schmiereigenschaft und verleiht einem Spritzteil eine feine Gefügeausbildung.

Das erfindungsgemäße Kunststoffmaterial mit selbstschmierenden Eigenschaften kann auch mit Verstärkungsmitteln, wie Glasfaseranteilen, Polymeren oder Kohlenstoff-Fasern, Aramidfasern od. dgl. angereichert sein. Aramidfasern bieten von allen Verstärkungen die beste Schmierwirkung und können den Verschleißfaktor von Thermoplasten drastisch verringern (z.B. in Kombination mit PTFE sind sowohl Verschleißfaktor als auch Reibkoeffizient deutlich niedriger).

Ausführungsbeispiele der Erfindung werden nachfolgend anhand der Zeichnungen näher erläutert.

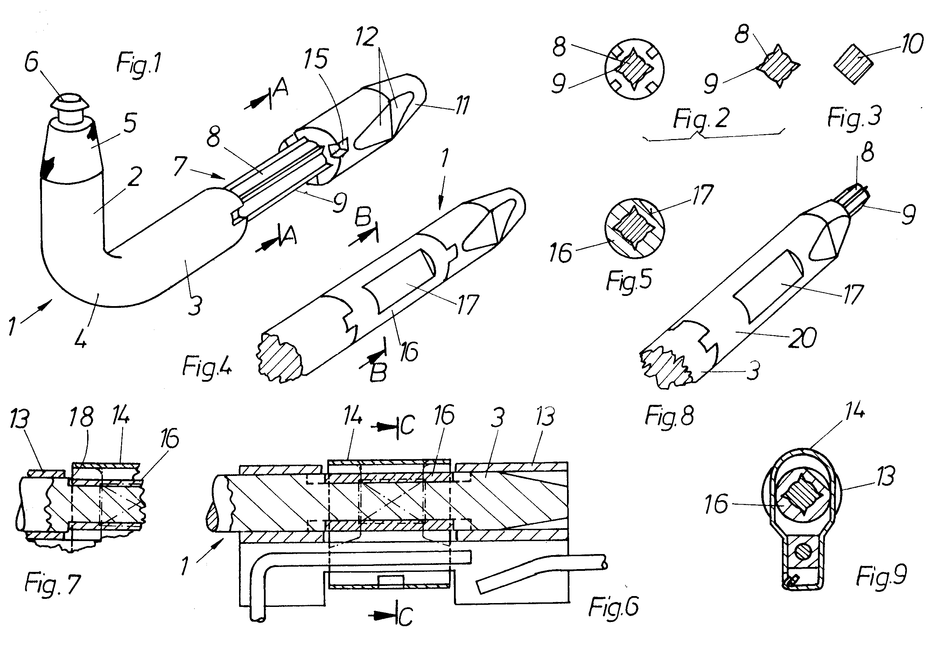

Die Sonnenblendenachse 1 entspr. Fig. 1 ist ein Kunststoffspritzling-Thermoplast mit Verstärkung (z.B. Polyamid 6 mit 30 % GF), wobei die Formgebung den Bedürfnissen/Einbauverhältnissen angepaßt ist. Die Sonnenblendenachse 1 wird gebildet aus einem kürzeren Achsschenkel 2 und einen längeren Achsschenkel 3, wobei ein harmonischer Übergang beider Achsschenkel durch einen Radius 4 erfolgt.

Fig. 1 stellt die Herstellung einer sogenannten Normalachse in einer FertigungsZwischenetappe als Spritzling dar. Dabei weist der kurze zylinderische Achsschenkel 2 eine Konusanbildung 5 mit endseitigem Pilzkopf 6 auf. Der lange zylinderische Achsschenkel 3 weist eine örtlich begrenzte Ausnehmung 7 mit einer Kernausbildung entspr. Schnitt A-A. Fig. 2 auf, die aus einem kleineren zylinderischen kreisförmigen Querschnitt 8 mit keilförmigen Erhebungen bzw. Rippen 9 gebildet ist oder alternativ entspr. Fig. 3 z.B. eine quadratische Form 10 hat. Endseitig weist der lange Achsschenkel 3 entspr. Fig. 1 eine Konusanbildung 11 mit gegenüberliegenden Abschrägungen 12 auf, die zum leichteren Einführen in das Lagergehäuse 13 entspr. Fig. 6 und der Rastfeder 14 zweckmäßig sind. Am Kreisumfang des langen Achsschenkels 3 sind darüber hinaus links und rechts der Ausnehmung 7 entspr. Fig. 1 z.B. je vier etwa rechteckige Ausnehmungserweiterungen 15 vorgesehen.

Der Spritzling entspr. Fig. 1 kann im gleichen Spritzwerkzeug-Nest im Bereich seiner Ausnehmung 7 eine Hülse 16 aus selbstschmierenden Compound erhalten, insbesondere umspritzt entspr. Fig. 4 bzw. Schnitt B-B Fig. 5 mit angebildeter Rastfläche 17. Das Material erfährt einen festen Verbund/Verdrehschutz u.a. durch die z.B. keilförmigen Rippen 9 des Kernquerschnittes 8 sowie der Ausnehmungserweiterungen 15 entspr. Fig. 5 bzw. Fig. 4. Je nach Bedarf kann der kreisförmige Querschnitt der Hülse 16 deckungsgleich sein mit dem des langen Achsschenkels 3 entspr. Fig. 6 bzw. kann einen stufenartigen Absatz 18 aufweisen entspr. Fig. 7 zwecks zusätzlicher axialer Verschiebesicherheit der kompletten Sonnenblendenachse 1.

Ein anderer Fertigungsprozeß-ablauf kann derart ausgelegt sein, daß zunächst die Hülse 16 aus selbstschmierenden Kunststoffmaterial abgespritzt und in das entsprechende Spritzwerkzeug-Nest der Sonnenblendenachse 1 eingelegt wird. Die Komplettierung der Sonnenblendenachse 1 erfolgt dann durch einen nachfolgenden Spritzvorgang. Hierbei bleibt noch zu erwähhen, daß der eigentliche Achsspritzling z.B. entsprechend den Darstellungen in Fig. 1 bzw. 8, aufgrund guter Erfahrungen in Herstellung und Praxis aus einem Thermoplast mit Glasfaseranteil besteht.

Fig. 8 zeigt darüber hinaus eine Alternativgestaltung bzgl. der Bildung des langen Achsschenkels 3 mit daran endseitig verlängerter Anbildung eines kleineren zylinderischen Querschnitts 8 mit z.B. keilförmigen Rippen 9 und einer verlängerten Umhüllung 20 aus selbstschmierendem Kunststoffmaterial. Der Herstellprozeß kann ebenfalls wie vorerwähnt durchgeführt werden.

Schnitt C-C, Fig. 9 zeigt im Querschnitt die Kombination der montierten Rastfeder 14 im Lagergehäuse 13 in Berührung mit der Hülse 16 bzw. der verlängerten Umhüllung 20 aus besagtem Thermoplast mit Gleitmittel (selbstschmierendes Compound), wobei zu erwähnen ist, daß die Rastfeder 14 eine zusätzliche Oberflächenbehandlung aufweisen kann als Mittel gegen korrosive Einflüsse.

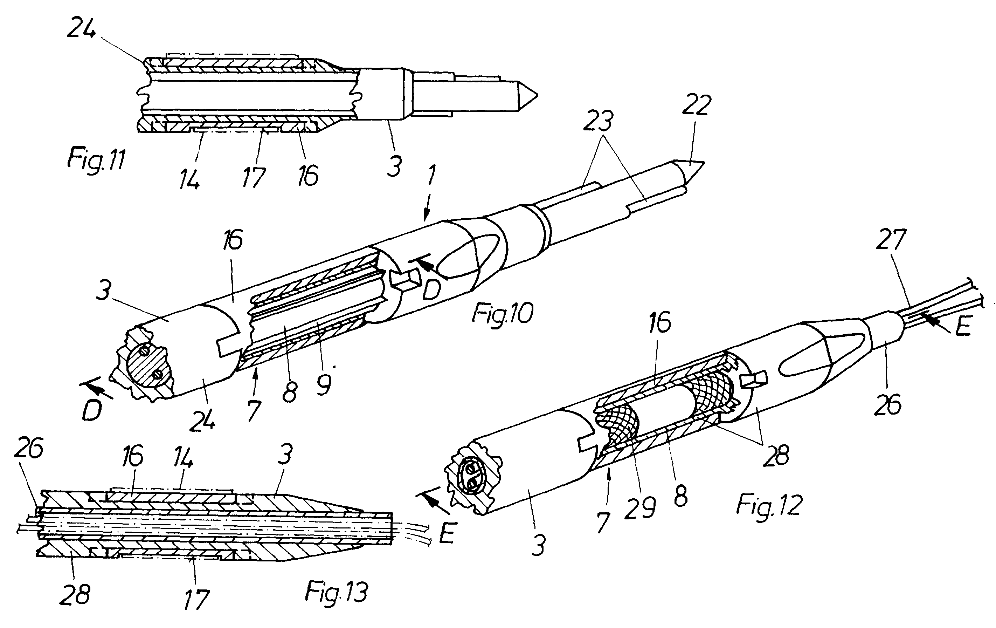

Des weiteren werden in Fig. 10 und 11 weitere Ausführungsbeispiele für beleuchtete Blendenausführungen dargestellt. Diese beinhalten einen örtlich plazierten Thermoplast mit Schmiermittel und sind in gleicher Fertigungsweise herzustellen wie die vorbeschriebenen Sonnenblendenachsen und weichen nur durch ihre Elektrifizierbarkeitssysteme ab.

Die Sonnenblendenachse 1 nach Fig. 10 besteht aus einem vorgefertigten Kern 22 mit integrierten Kontakten 23 die, wie dargestellt, endseitig freiliegen. Der Kern 22 wird in das entspr. Achsspritzwerkzeug-Nest eingelegt und mit Thermoplast 24 glasfaserverstärkt umspritzt, wobei z.B. die örtlich begrenzte Ausnehmung 7 mit dem kleineren kreisförmigen Querschnitt 8 seiner z.B. keilförmigen Rippen 9 abschließend eine Hülse 16 mit Rastfläche 17 aus selbstschmierenden Compound entspr. Schnitt D-D Fig. 11 erhält. Anstelle der örtlichen Ausnehmung 7 kann sich diese im oder über den Gesamtendbereich erstrecken wie in Fig. 8 dargestellt, dimensionell allerdings wie in Fig. 10, 11 ausgeführt.

Die Sonnenblendenachse 1 entspr. Fig. 12 weist als Kern ein Rohr 26 auf, welches als Kanal für die Zuführung von z.B. zwei ummantelten Kabeln 27 dient. Das Rohr 26 wird in das entspr. Achsspritzwerkzeug-Nest eingelegt mit Thermoplast 28 glasfaserverstärkt umspritzt, mit z.B. örtlich begrenzter Abstufung 7 und einem Kleineren kreisförmigen Querschnitt 8, wobei eine Rändelung 29 auf dem Rohr 26 einen Verdrehschutz bzw. festen Sitz bewirkt. Danach erfolgt die Anbildung der Hülse 16 aus selbstschmierendem Kunststoffmaterial entspr. Fig. 13, Schnitt E-E.

## Patentansprüche

1. Sonnenblendenachse (1) für Fahrzeugsonnenblenden, die zumindest überwiegend aus Kunststoff besteht und einen kurzen Achsschenkel (2) sowie einen langen Achsschenkel (3) aufweist, wobei der kurze Achsschenkel (2) in ein an der Fahrzeugkarosserie befestigbares Lagerböckchen eingreift und der lange Achsschenkel (3) in ein im Sonnenblendenkörper eingelagertes Lagergehäuse (13) eingreift, das eine den langen Achsschenkel (3) über einen axialen Teilbereich klemmende Rastfeder (14) trägt, dadurch gekennzeichnet, daß der lange Achsschenkel (3) über einen axialen, mit der Rastfeder (14) in Berührung stehenden Teilbereich ein Kunststoffmaterial mit selbstschmierenden Eigenschaften aufweist.

2. Sonnenblendenachse nach Anspruch 1, dadurch gekennzeichnet, daß die Sonnenblendenachse (1) eine umlaufende, sich über einen axialen Teilbereich des langen Achsschenkels (3) erstreckende Ausnehmung (7) aufweist, die durch einen Kunststoffkörper mit selbstschmierenden Eigenschaften ausgefüllt ist.

3. Sonnenblendenachse nach Anspruch 1 oder 2, dadurch gekennzeichnet, daß der Kunststoffkörper mit selbstschmierenden Eigenschaften als Hülse (16) ausgebildet ist.

4. Sonnenblendenachse nach wenigstens einem der Ansprüche 1 bis 3, dadurch gekennzeichnet, daß im Bereich der Ausnehmung (7) der Sonnenblendenachse (1) Rippen (9), Ausnehmungserweiterungen (15) od. dgl. zur Verankerung des Kunststoffkörpers (16) mit selbstschmierenden Eigenschaften ausgebildet sind.

5. Sonnenblendenachse nach wenigstens einem der vorhergehenden Ansprüche, dadurch gekennzeichnet, daß der Kunststoffkörper (16) mit selbstschmierenden Eigenschaften durch bereichsweises Umspritzten des langen Achsschenkels (3) unmittelbar an der Sonnenblendenachse (1) angeformt ist.

6. Sonnenblendenachse nach mindestens einem der vorhergehenden Ansprüche, dadurch gekennzeichnet, daß der Kunststoffkörper (16) mit selbstschmierenden Eigenschaften mindestens eine mit der Rastfeder (14) zusammenwirkende Abflachung (17) aufweist.

7. Sonnenblendenachse nach mindestens einem der vorhergehenden Ansprüche, dadurch gekennzeichnet, daß das Kunststoffmaterial mit selbstschmierenden Eigenschaften aus einem mit Gleitmitteln angereicherten Thermoplast besteht.

8. Sonnenblendenachse nach mindestens einem der vorhergehenden Ansprüche, dadurch gekennzeichnet, daß das aus einem Thermoplast, wie Polyamid bestehende Kunststoffmaterial mit Polyetrafluorethylen (PTFE), Graphitpulver, Molybdändisulfid od. dgl. angereichert ist.

9. Sonnenblendenachse nach mindestens einem der vorhergehenden Ansprüche, dadurch gekennzeichnet, daß das aus einem Thermoplast bestehende mit Gleitmitteln angereicherte Kunststoffmaterial zusätzlich mit Verstärkungsmitteln, wie Glasfasern, Kohlenstoffasern, Aramidfasern od. dgl. angereichert ist.

10. Sonnenblendenachse nach einem oder mehreren der vorhergegangenen Ansprüche gekennzeichnet durch die Anwendung eines Kunststoffmaterial mit selbstschmierenden Eigenschaften an einem mit der Rastfeder (14) in Berührung kommenden axialen Teilbereich des langen Achsschenkels (3) der Sonnenblendenachse (1).
